# EUROPÄISCHE PATENTSCHRIFT

(11) **EP 0 789 226 B1**
(45) Veröffentlichungstag und Bekanntmachung des Hinweises auf die Patenterteilung: **20.06.2001**
(21) Anmeldenummer: 97100309.0
(22) Anmeldetag: 10.01.1997
(51) Int. Cl.: G01D 5/249, G01D 5/244

(54) **Positionsmesseinrichtung**
Position measuring device
Dispositif de mesure de positions

(30) Priorität: 10.02.1996 DE 19604871
(43) Veröffentlichungstag der Anmeldung: 13.08.1997
(73) Patentinhaber: Dr. Johannes Heidenhain GmbH, 83292 Traunreut (DE)
(72) Erfinder: Braasch, Jan, Dr., 83352 Altenmarkt (DE)

(56) Entgegenhaltungen:
- DE-C- 4 309 863
- US-A- 5 023 434
- PATENT ABSTRACTS OF JAPAN vol. 016, no. 143 (P-1335), 9.April 1992 & JP 04 001522 A (NIKON CORP), 7.Januar 1992,

## Beschreibung

Die Erfindung betrifft ein Verfahren zur Bestimmung der absoluten Position gemäß dem Oberbegriff des Anspruchs 1 sowie eine Positionsmeßeinrichtung zur Durchführung des Verfahrens.

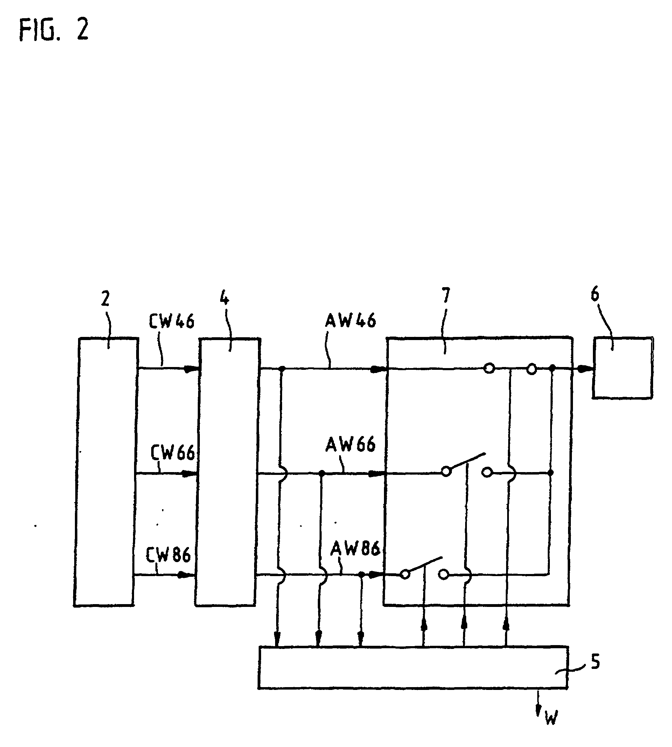

In der JP-A-0 400 1522 ist beispielsweise eine Positionsmeßeinrichtung beschrieben, bei der die Maßverkörperung gemäß der dort gezeigten Figur 2 aus einer Codespur mit in Meßrichtung hintereinander angeordneten Codeelementen besteht. Die Codeelemente sind in pseudozufälliger Verteilung vorgesehen, so daß eine bestimmte Anzahl von aufeinanderfolgenden Codeelementen jeweils ein Codewort und alle Codeelemente eine kontinuierliche Folge von unterschiedlichen Codewörtern bilden. Ein derartiger Code wird auch als Kettencode bezeichnet. Die Maßverkörperung wird von mehreren Gruppen von Detektorelementen abgetastet, um gleichzeitig mehrere komplette, sich nicht überlappende Codewörter abzutasten. Zur Erkennung von Ablesefehlern werden diese Codewörter einer Fehlerprüfeinrichtung zugeführt, in der die Abstände der Ist-Positionen mit den Abständen der Detektorgruppen verglichen werden und ein Warnsignal ausgegeben wird, wenn beide nicht übereinstimmen.

Ein Nachteil dieses Verfahrens und dieser Positionsmeßeinrichtung ist, daß ausschließlich eine fehlerhafte Ablesung von Codewörtern erkannt werden kann.

Bei der Positionsmeßeinrichtung gemäß der DE-C-4 309 863 wird ebenfalls eine einspurige Codespur von einer Abtasteinheit zur Ermittlung der absoluten Position abgetastet. Bei der Abtastung eines derartigen Codes ist das Codewort nicht eindeutig, wenn die Kanten der Codeelemente abgetastet werden. Zur Erzeugung eines eindeutigen Codewortes unter Umgehung der Kantenbereiche sind zwei Gruppen von Detektorelementen zur Erzeugung von zwei Codewörtern vorgesehen. Die Detektorelemente der zwei Gruppen sind abwechselnd hintereinander in einem gegenseitigen Abstand eines halben Codeelementes angeordnet. In einer Fehlerprüfeinrichtung wird festgestellt, welches der beiden Codewörter fehlerfrei ist, das fehlerfreie Codewort wird zur Positionsbestimmung benutzt.

Nachteilig bei dieser Positionsmeßeinrichtung und diesem Verfahren ist, daß die Codewörter von einem gemeinsamen Abtastbereich der Maßverkörperung abgeleitet werden. Eine partielle Verschmutzung der Maßverkörperung führt daher zu keiner korrekten Positionsmessung.

Der Erfindung liegt die Aufgabe zugrunde, ein Verfahren zur Bestimmung der absoluten Position anzugeben, mit dem die Positionsmeßeinrichtung mit hoher Zuverlässigkeit bzw. Betriebssicherheit arbeitet.

Diese Aufgabe wird erfindungsgemäß durch die Merkmale des Anspruches 1 gelöst.

Weiterhin liegt der Erfindung die Aufgabe zugrunde, eine Positionsmeßeinrichtung mit hoher Zuverlässigkeit bzw. Betriebssicherheit zu schaffen.

Diese Aufgabe wird erfindungsgemäß durch die Merkmale des Anspruches 5 gelöst.

Die mit der Erfindung erzielten Vorteile bestehen insbesondere darin, daß Fehler im abgetasteten Abschnitt der Codespur nicht nur erkannt, sondern auch toleriert werden können, indem fehlerhafte Codewörter ausgeschieden werden. Die Wahrscheinlichkeit, daß bei der Abtastung mehrerer, voneinander völlig unabhängiger Codewörter zumindest ein Codewort korrekt abgelesen wird, ist sehr groß, weshalb gemäß der Erfindung die Betriebssicherheit der Positionsmeßeinrichtung erhöht wird.

Vorteilhafte Ausbildungen der Erfindung entnimmt man den abhängigen Ansprüchen.

Ausführungsbeispiele der Erfindung werden anhand der Zeichnungen näher erläutert.

Es zeigen
- Figur 1: eine Maßverkörperung und eine Abtasteinheit und
- Figur 2: eine Fehlerprüfeinrichtung gemäß der Erfindung.

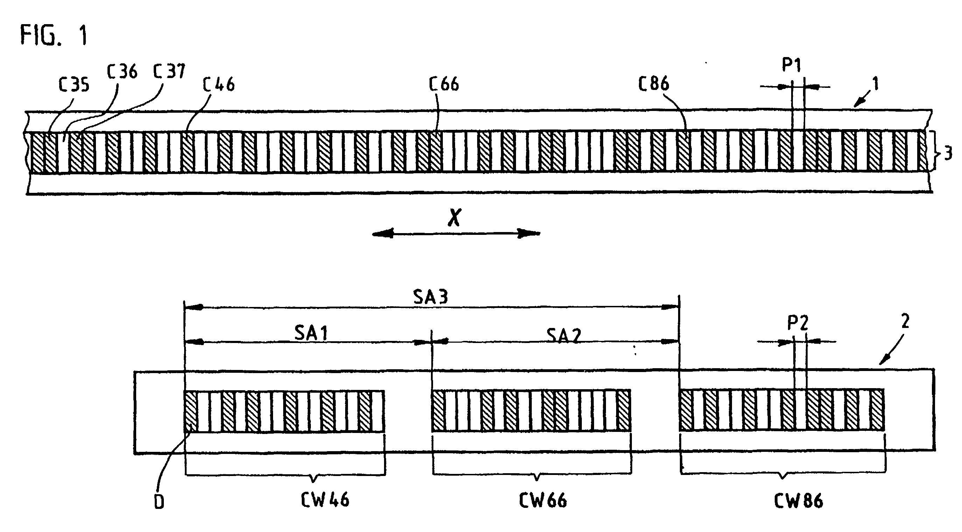

In Figur 1 ist eine Maßverkörperung 1 dargestellt, die von einer relativ dazu verschiebbaren Abtasteinheit 2 abgetastet wird. Die Maßverkörperung 1 weist eine Codespur 3 mit in Meßrichtung X aufeinanderfolgenden Codeelementen C der Breite P1 auf. Die Codeelemente C bilden einen Kettencode, das heißt, sie sind in Meßrichtung X pseudozufällig verteilt und bilden eine kontinuierliche Folge von unterschiedlichen Codewörtern. Die schraffiert dargestellten Codeelemente C35, C37 sind beispielsweise lichtundurchlässig und die nicht schraffierten Codeelemente z.B. C36 transparent, so daß bei einer lichtelektrischen Abtastung der Maßverkörperung 1 jedem lichtundurchlässigen Codeelement C der binäre Wert 0 und jedem transparenten Codeelement C der binäre Wert 1 zugeordnet wird. Die Codeelemente C können aber auch magnetisch oder kapazitiv abtastbar ausgebildet sein. Derartige Kettencodes sind beispielsweise in der DE 39 42 625 A1 ausführlich beschrieben. Mit einem Kettencode ist ein besonders einfacher und platzsparender Aufbau einer absoluten Positionsmeßeinrichtung möglich.

Zur Abtastung der Codespur 3 ist eine Vielzahl von in Meßrichtung X hintereinander angeordneten Detektorelementen D vorgesehen. Diese Detektorelemente D können lichtempfindliche Bereiche eines Photodioden-Arrays, eine sogenannten CCD-Arrays sein (CCD = charge coupled device). Der Abstand P2 der Detektorelemente D ist im Beispiel zum besseren Verständnis identisch mit der Breite P1 eines Codeelementes C. Die Erfindung ist aber auch einsetzbar, wenn die Breite P1 eines Codeelementes C von P2 abweicht, insbesondere, wenn P1 ein Vielfaches von P2 ist.

Die Abtasteinheit 2 besitzt mindestens soviel Detektorelemente D, um drei vollständige, sich nicht überlappende Codewörter CW abzulesen. Jedes Codewort CW besteht im Beispiel aus 16 Bits, und der Abstand zwischen zwei Codewörtem ist jeweils 4 Bits, so daß der Abtastbereich 56 Bits oder 56 Codeelemente beträgt. Die drei Codewörter CW46, CW66, CW86 werden zu einem gemeinsamen Abtastzeitpunkt an voneinander beabstandeten Orten der Codespur 3 generiert und einer Dekodiereinrichtung 4 zur Bestimmung der Absolutposition AW46, AW66, AW86 jedes Codewortes CW46, CW66, CW86 zugeführt. Die Dekodiereinrichtung 4 kann beispielsweise ein Speicher in Form einer Eprom-Tabelle sein, dessen Adressen die Codewörter CW46, CW66, CW86 sind. Gemäß der Erfindung werden nun die Codewörter CW46, CW66, CW86 selbst oder die daraus gewonnenen Absolutpositionen AW46, AW66, AW86 gemäß Figur 2 einer Fehlerprüfeinrichtung 5 zugeführt. In der Fehlerprüfeinrichtung 5 werden alle möglichen Differenzen, also die ermittelten Abstände IA1, IA2, IA3 der Codewörter CW46, CW66, CW86 berechnet und mit den Soll-Abständen SA1, SA2, SA3 verglichen. Die Soll-Abstände SA1, SA2, SA3 ergeben sich aus der Anordnung der Detektorelemente D. Der Soll-Abstand SA1 zwischen dem Codewort CW46 und dem Codewort CW66 sowie der Soll-Abstand SA2 zwischen dem Codewort CW66 und dem Codewort CW86 beträgt jeweils 20 Bits, entsprechend einer Codewortlänge plus dem Zwischenraum von jeweils 4 Bits. Der Soll-Abstand SA3 zwischen dem Codewort CW46 und dem Codewort CW86 beträgt 40 Bits, entsprechend zweier Codewortlängen plus zwei Zwischenräumen von jeweils 4 Bits. In Abhängigkeit des Vergleichsergebnisses wird ein als falsch abgelesen erkanntes Codewort CW66, CW86 von der weiteren Verarbeitung ausgeschlossen und ein als korrekt abgelesen erkanntes Codewort CW46 einer Folgeelektronik 6, beispielsweise einer Positionsanzeige oder einer NC-Steuerung zugeführt. Eine Auswahlschaltung 7 zur Freigabe des als korrekt erkannten Codewortes CW46 ist in Figur 2 schematisch dargestellt. Nachfolgend ein Schema, nach dem die Auswahlschaltung 7 in Abhängigkeit des Vergleichsergebnisses bestimmte Codewörter CW46 bis CW86 zur Weiterverarbeitung sperrt (ungültig) oder freigibt (gültig):

| Ergebnis Möglichkeit | IA1=SA1 | IA2=SA2 | IA3=SA3 | CW46 | CW66 | CW86 |
|---|---|---|---|---|---|---|
| 1. | Ja | Nein | Nein | gültig | gültig | ungültig |
| 2. | Nein | Ja | Nein | ungültig | gültig | gültig |
| 3. | Nein | Nein | Ja | gültig | ungültig | gültig |
| 4. | Ja | Ja | Nein | ungültig | ungültig | ungültig |
| 5. | Nein | Ja | Ja | ungültig | ungültig | ungültig |
| 6. | Ja | Nein | Ja | ungültig | ungültig | ungültig |
| 7. | Ja | Ja | Ja | gültig | gültig | gültig |
| 8. | Nein | Nein | Nein | ungültig | ungültig | ungültig |

Es ist ersichtlich, daß bei drei Codewörtern CW46 bis CW86 ein beliebiges falsch sein darf, dieses erkennbar ist und eines der übrigen beiden Codewörter als korrektes Codewort zur Weiterverarbeitung der Folgeelektronik 6 zugeführt wird, ohne daß der Meßbetrieb unterbrochen wird. Je mehr sich nicht überlappende Codewörter CW abgetastet werden, desto mehr Codewörter CW dürfen fehlerhaft sein, um trotzdem noch eines der weiteren Codewörter CW als korrektes Codewort CW zu identifizieren und der Weiterverarbeitung zuzuführen. Je mehr Codewörter CW gleichzeitig abgetastet werden, desto wahrscheinlicher wird zumindest eines der Codewörter CW als korrekt erkannt und um so höher ist die Betriebssicherheit der Positionsmeßeinrichtung. Es hat sich gezeigt, daß bei der Abtastung von vier Codewörtern die Betriebssicherheit mit vertretbarem Aufwand bereits erheblich gesteigert werden kann, da bereits zwei beliebige Codewörter fehlerhaft sein dürfen.

Besonders vorteilhaft ist es, wenn die Fehlerprüfeinrichtung 5 zusätzlich in Abhängigkeit von der Anzahl der als fehlerhaft erkannten Codewörter CW ein Warnsignal W ausgibt.

Es ist selbstverständlich, daß die der Folgeelektronik 6 zugeführten als korrekt erkannten Codewörter oder Absolutpositionen in Abhängigkeit der Soll-Lage der Detektorelemente korrigiert werden. Wird beispielsweise die korrekte Absolutposition aus den ersten 16 Detektorelementen gewonnen und diese Detektorelemente dienen als Referenzposition, so kann das Codewort CW46 direkt oder dekodiert der Folgeelektronik 6 zugeführt werden. Wird in diesem Fall aber das Codewort CW66 als korrekt erkannt, so muß dieses Codewort CW66 um den Abstand SA1 zur genannten Referenzposition korrigiert werden. Wird das Codewort CW86 als korrekt erkannt, so muß dieses Codewort CW86 um den Abstand SA3 korrigiert werden. Diese Korrektur kann durch ein Rechenwerk erfolgen, in dem beispielsweise (CW66 minus SA1) bzw. (CW86 minus SA3) berechnet wird. Eine weitere Möglichkeit zur Berücksichtigung der Abstände SA1, SA3 zur gewählten Referenzposition besteht darin, die Dekodiereinrichtung 4 so auszubilden, daß im fehlerfreien Fall AW46=AW66=AW86. Dies erreicht man dadurch, daß beispielsweise die Dekodiertabelle für das Codewort CW66 um 20 Stellen und die Dekodiertabelle für das Codewort CW86 um 40 Stellen gegenüber der Dekodiertabelle des Codewortes CW46 verschoben ausgelesen wird.

Die Erfindung ist besonders vorteilhaft bei der Abtastung des einspurigen Kettencodes einsetzbar, bei dem jede Verschiebung der Abtasteinheit 2 um ein einziges Codeelement C zu unterschiedlichen Codewörtern führt. Sie ist aber auch bei absoluten Positionsmeßeinrichtungen einsetzbar, bei denen ein einspuriger Blockcode vorliegt.

Die Erfindung ist bei Längen- und Winkelmeßsystemen einsetzbar. Zur Feinauflösung kann neben der Codespur eine Inkrementalspur angeordnet sein.

## Patentansprüche

1. Verfahren zur Bestimmung der absoluten Position einer relativ zu einer Maßverkörperung (1) in Meßrichtung (X) verschiebbaren Abtasteinheit (2), wobei die Maßverkörperung (1) eine Codespur (3) mit in Meßrichtung (X) aufeinanderfolgenden Codeelementen (C) aufweist, welche eine Folge von unterschiedlichen Codewörtern (CW46, CW66, CW86) bilden und die Abtasteinheit (2) eine Vielzahl von in Meßrichtung (X) aufeinanderfolgende Detektorelemente (D) besitzt, mit denen gleichzeitig mindestens drei komplette, sich nicht überlappende unterschiedliche Codewörter (CW46, CW66, CW86) abgetastet werden, wobei die Codewörter (CW46, CW66, CW86) oder decodierten Codewörter (AW46, AW66, AW86) einer Fehlerprüfeinrichtung (5) zugeführt und auf Fehler überprüft werden, dadurch gekennzeichnet, daß
- die Codewörter (CW46, CW66, CW86) vorgegebene gegenseitige Soll-Abstände (SA1, SA2, SA3) aufweisen und in der Fehlerprüfeinrichtung (5) Ist-Abstände (IA1, IA2, IA3) der Codewörter (CW46, CW66, CW86) ermittelt werden,
- die Ist-Abstände (SA1, SA2, SA3) mit den Soll-Abständen (SA1, SA2, SA3) verglichen werden,
- aus den mehreren gleichzeitig erfaßten Codewörtern (CW46, CW66, CW86) ein als korrekt erkanntes Code wort zur Bestimmung der momentanen Absolutposition dient, und
- als fehlerhaft erkannte Codewörter (CW66, CW86) von der weiteren Verarbeitung ausgeschlossen werden.

2. Verfahren nach Anspruch 1, dadurch gekennzeichnet, daß alle Codewörter (CW46, CW66, CW86) einer Auswahlschaltung (7) zugeführt werden und in Abhängigkeit des Ergebnisses der Fehlerprüfung ein als korrekt erkanntes Codewort (CW46) der mindestens drei Codewörter (CW46, CW66, CW86) zur weiteren Verarbeitung freigegeben wird, und ein als fehlerhaft erkanntes Codewort (CW66, CW86) dagegen von der weiteren Verarbeitung zur Bestimmung der momentanen Absolutposition ausgeschlossen wird.

3. Verfahren nach Anspruch 1 oder 2, dadurch gekennzeichnet, daß alle möglichen gegenseitigen Ist-Abstände (IA1, IA2, IA3) aller Codewörter (CW46, CW66, CW86) mit den Soll-Abständen (SA1, SA2, SA3) verglichen werden.

4. Verfahren nach einem der Ansprüche 1 bis 3, dadurch gekennzeichnet, daß in Abhängigkeit von der Anzahl der als fehlerhaft erkannten Codewörter (CW66, AW86) ein Warnsignal (W) ausgegeben wird.

5. Positionsmeßeinrichtung zur Durchführung des Verfahrens nach einem der vorhergehenden Ansprüche 1 bis 4, mit
- einer Maßverkörperung (1) in Form einer Codespur (3) mit in Meßrichtung (X) aufeinanderfolgenden Codeelementen (C), welche eine Folge von unterschiedlichen Codewörtern (CW46, CW66, CW86) bilden,
- einer relativ zu der Maßverkörperung (1) in Meßrichtung (X) verschiebbaren Abtasteinheit (2), die eine Vielzahl von in Meßrichtung (X) aufeinanderfolgende Detektorelemente (D) besitzt, um gleichzeitig mindestens drei komplette, sich nicht überlappende unterschiedliche Codewörter (CW46, CW66, CW86) abzutasten,
- einer Fehlerprüfeinrichtung (5), an der die mindestens drei Codewörter (CW46, CW66, CW86) oder decodierten Codewörter (AW46, AW66, AW86) anstehen und auf Fehler überprüft werden,
- einer Auswahlschaltung (7), der die mindestens drei Codewörter (CW46, CW66, CW86) zugeführt sind und in Abhängigkeit des Ergebnisses der Fehlerprüfung ein als korrekt erkanntes Codewort (CW46) der mindestens drei Codewörter (CW46, CW66, CW86) zur weiteren Verarbeitung von der Auswahlschaltung (7) freigegeben wird, und ein als fehlerhaft erkanntes Codewort (CW66, CW86) dagegen von der weiteren Verarbeitung zur Bestimmung der momentanen Absolutposition ausgeschlossen ist.

6. Positionsmeßeinrichtung nach Anspruch 5, dadurch gekennzeichnet, daß die aufeinanderfolgenden Codeelemente (C) der Codespur (3) eine pseudozufällige Verteilung in Form eines Kettencodes aufweisen, welche eine kontinuierliche Folge von unterschiedlichen Codewörtern (CW46, CW66, CW86) bilden.

7. Positionsmeßeinrichtung nach Anspruch 5 oder 6, dadurch gekennzeichnet, daß alle Detektorelemente (D) zur Erfassung der mindestens drei Codewörter (CW) in einem einzigen CCD-Array oder einer Photodiodenzeile ausgebildet sind.

## Claims

1. Method for determining the absolute position of a scanning unit (2) displaceable relative to a material measure (1) in measurement direction (X), the material measure (1) having a code track (3) with code elements (C) succeeding one another in measurement direction (X) and which form a sequence of different code words (CW46, CW66, CW86), and the scanning unit (2) having a plurality of detector units (D) succeeding one another in measurement direction (X), by means of which simultaneously at least three complete, nonoverlapping, different code words (CW46, CW66, CW86) are scanned, the code words (CW46, CW66, CW86) or decoded code words (AW46, AW66, AW86) being supplied to an error checking device (5) and checked for errors, **characterised in that**
- the code words (CW46, CW66, CW86) have pre-determined mutual set spacings (SA1, SA2, SA3) and in the error checking device (5) actual spacings (IA1, IA2, IA3) of the code words (CW46, CW66, CW86) are determined,
- the actual spacings (SA1, SA2, SA3) are compared with the set spacings (SA1, SA2, SA3),
- from the plurality of simultaneously detected code words (CW46, CW66, CW86) a code word recognised as correct serves to determine the current absolute position, and
- code words (CW66, CW86) recognised as faulty are excluded from further processing.

2. Method according to claim 1, **characterised in that** all the code words (CW46, CW66, CW86) are supplied to a selection circuit (7) and in dependence on the result of the error check, a code word (CW46), recognised as correct, of the at least three code words (CW46, CW66, CW86) is released for further processing, and a code word (CW66, CW86) recognised as faulty, on the other hand, is excluded from further processing to determine the current absolute position.

3. Method according to claim 1 or 2, **characterised in that** all the possible mutual actual spacings (IA1, IA2, IA3) of all the code words (CW46, CW66, CW86) are compared with the set spacings (SA1, SA2, SA3).

4. Method according to one of claims 1 to 3, **characterised in that** a warning signal W is emitted in dependence on the number of code words (CW66, AW86) recognised as faulty.

5. Position measuring device to carry out the method according to one of the preceding claims 1 to 4, having
- a material measure (1) in the form of a code track (3) with code elements (C) succeeding one another in measurement direction (X) and which form a sequence of different code words (CW46, CW66, CW86),
- a scanning unit (2), displaceable relative to the material measure (1) in measurement direction (X) and which has a large number of detector elements (D) succeeding one another in measurement direction (X), in order to scan simultaneously at least three complete, non-overlapping, different code words (CW46, CW66, CW86),
- an error checking device (5) at which the at least three code words (CW46, CW66, CW86) or decoded code words (AW46, AW66, AW86) are present and are checked for errors,
- a selection circuit (7) to which the at least three code words (CW46, CW66, CW86) are supplied, and in dependence on the result of the error check, a code word (CW46), recognised as correct, of the at least three code words (CW46, CW66, CW86) is released by the selection circuit (7) for further processing, and a code word (CW66, CW86), recognised as faulty, is on the other hand excluded from further processing to determine the current absolute position.

6. Position measuring device according to claim 5, **characterised in that** the successive code elements (C) of the code track (3) have pseudo-random distribution in the form of a chain code, which form a continuous sequence of different code words (CW46, CW66, CW86).

7. Position measuring device according to claim 5 or 6, **characterised in that** all the detector elements (D) to detect the at least three code words (CW) are configured in a single CCD array or a photodiode cell.

## Revendications

1. Procédé pour déterminer la position absolue d'une unité de palpage (2) mobile dans la direction de mesure (X) par rapport à une mesure matérialisée (1), la mesure matérialisée (1) portant une rangée de codes (3), avec des éléments de code (C) disposés les uns à la suite des autres dans la direction de mesure (X), qui forment une suite de mots de code (CW46, CW66, CW86) différents et l'unité de palpage (2) comportant une pluralité d'éléments détecteurs (D) disposés les uns à la suite des autres dans la direction de mesure (X), à l'aide desquels au moins trois mots de code (CW46, CW66, CW86) complets différents, qui ne se chevauchent pas sont palpés, les mots de code (CW46, CW66, CW86) ou des mots de code (AW46, AW66, AW86) décodés étant envoyés à un dispositif de détection d'erreur (5) et vérifiés, caractérisé
- en ce que les mots de code (CW46, CW66, CW86) présentent des écarts théoriques (SA1, SA2, SA3) et que dans le dispositif de détection d'erreur (5) on détermine les écarts réels (IA1, IA2, IA3) des mots de code (CW46, CW66, CW86),
- en ce qu'on compare les écarts réels (IA1, IA2, IA3) aux écarts théoriques (SA1, SA2, SA3),
- en ce que parmi la pluralité de mots de code (CW46, CW66, CW86) palpés simultanément, on utilise un mot de code avéré correct pour déterminer la position absolue instantanée et
- en ce que l'on exclut les mots de code (CW66, CW86) avérés erronés de la suite du traitement.

2. Procédé selon la revendication 1, caractérisé en ce qu'on transmet tous les mots de code (CW46, CW66, CW86) à un circuit sélecteur (7) et, en fonction du résultat de la vérification, on valide pour la suite du traitement un mot de code (CW46) avéré correct parmi les au moins trois mots de code (CW46, CW66, CW86) et on exclut un mot de code (CW66, CW86) avéré erroné de la suite du traitement pour déterminer la position absolue instantanée.

3. Procédé selon la revendication 1 ou 2, caractérisé en ce qu'on compare tous les écarts réels (IA1, IA2, IA3) possibles de tous les mots de code (CW46, CW66, CW86) aux écarts théoriques (SA1, SA2, SA3).

4. Procédé selon une des revendications 1 à 3, caractérisé en ce qu'en fonction du nombre de mots code (CW66, CW86) avérés erronés on délivre un signal d'alarme (W).

5. Dispositif de mesure de position pour la mise en oeuvre du procédé selon une des revendications précédentes 1 à 4, comprenant
- une mesure matérialisée (1) sous la forme d'une rangée de codes (3), avec des éléments de code (C) disposés les uns à la suite des autres dans la direction de mesure (X), qui forment une suite de mots de code (CW46, CW66, CW86) différents,
- une unité de palpage (2) pouvant se déplacer dans la direction de mesure (X) par rapport à la mesure matérialisée et comportant une pluralité d'éléments détecteurs (D) disposés les uns à la suite des autres dans la direction de mesure (X) pour palper simultanément au moins trois mots de code (CW46, CW66, CW86) complets, différents, qui ne se chevauchent pas,
- un dispositif de détection d'erreur (5) qui reçoit les mots de code (CW46, CW66, CW86) au nombre d'au moins trois ou des mots de code décodés (AW46, AW66, AW86) et recherche les erreurs,
- un circuit sélecteur (7) auquel sont envoyés les mots de code (CW46, CW 66, CW86) au nombre d'au moins trois et qui, en fonction du résultat de la vérification, valide pour la poursuite du traitement un mot de code (CW46) avéré correct parmi les les mots de code (CW46, CW 66, CW86) au nombre d'au moins trois et exclut de la poursuite du traitement un mot de code (CW66, CW86) avéré erroné pour la détermination de position absolue instantanée.

6. Dispositif de mesure de position selon la revendication 5, caractérisé en ce que les éléments de code (C) disposés les uns à la suite des autres de la rangée de codes (3) présentent une répartition pseudo-aléatoire sous la forme d'un code chaîne, qui forme une suite continue de mots de codes (CW46, CW66, CW86) différents.

7. Dispositif de mesure de position selon la revendication 5 ou 6, caractérisé en ce que les éléments détecteurs (D) pour palper les mots de code (CW) au nombre d'au moins trois sont agencés en une rangée unique de capteurs CCD ou en une rangée de photodiodes.
